# EUROPÄISCHE PATENTSCHRIFT

(11) **EP 1 368 883 B1**
(45) Veröffentlichungstag und Bekanntmachung des Hinweises auf die Patenterteilung: **28.07.2004**
(21) Anmeldenummer: 02704732.3
(22) Anmeldetag: 05.03.2002
(51) Int. Cl.: H02K 15/02

(54) **BAUGRUPPE EINER ELEKTRISCHEN MASCHINE UND ELEKTRISCHE MASCHINE MIT EINER DERARTIGEN BAUGRUPPE**
SUBASSEMBLY OF AN ELECTRICAL MACHINE AND ELECTRICAL MACHINE WITH ONE SUCH SUBASSEMBLY
SOUS-ENSEMBLE POUR UNE MACHINE ELECTRIQUE ET MACHINE ELECTRIQUE COMPORTANT UN TEL SOUS-ENSEMBLE

(30) Priorität: 05.03.2001 DE 10110466
(43) Veröffentlichungstag der Anmeldung: 10.12.2003
(73) Patentinhaber: Compact Dynamics GmbH, 82319 Starnberg (DE)
(72) Erfinder: GRÜNDL, Andreas, 81377 München (DE); HOFFMANN, Bernhard, 82319 Starnberg (DE)
(74) Vertreter: Schmidt, Steffen J., Dipl.-Ing.
(86) Internationale Anmeldenummer: PCT/EP2002/002407
(87) Internationale Veröffentlichungsnummer: WO 2002/071581

(56) Entgegenhaltungen:
- EP-A- 0 629 034
- DE-A- 3 027 987
- US-A- 4 114 019

## Beschreibung

### Hintergrund der Erfindung

Die Erfindung betrifft eine Baugruppe einer elektrischen Maschine sowie eine elektrische Maschine mit einer derartigen Baugruppe.

### Begriffsdefinitionen

Unter Baugruppe einer elektrischen Maschine wird hierbei sowohl ein Stator als auch ein Rotor einer elektrischen Maschine in Form einer Innen- oder Außenläufermaschine verstanden. Eine elektrische Maschine kann hierbei sowohl ein elektrischer Motor als auch ein elektrischer Generator sein. Die Erfindung kommt insbesondere bei Drehmaschinen aller Art (Synchron-, Asynchron-, Reluktanzmaschinen, Permanenterregte Maschinen oder dergl.) zum Einsatz.

### Stand der Technik

Im Stand der Technik ist es bekannt, die magnetisch leitenden Teile einer elektrischen Maschine (insbesondere einer Wechselstrommaschine) wegen der sonst auftretenden Wirbelströme aus Blechen aufzubauen. Für die Blechpakete werden dabei typischerweise zwischen 0.35 mm und 1.5 mm dicke, einseitig oder doppelseitig isolierte Blechtafeln aus Dynamoblech (warmgewalztes Elektroblech) in entsprechend geformte Streifen geschnitten. Aus diesen Streifen werden Stator- und Rotorbleche mit entsprechenden Ausnehmungen gestanzt, wobei ein möglichst geringer Abfall angestrebt wird. Die solcherart hergestellten Stator- und Rotorbleche werden aufeinander geschichtet und unter Druck zu Blechpaketen vereint, bei denen die Ausnehmungen der einzelnen Bleche Nuten für die anschließend einzubringenden Stator- und Rotorwicklungen bilden.

Sofern die einzelnen Blech-Lagen des Rotors oder des Stators einstückig hergestellt sind (sog. Ronden), ist der Stanzabfall erheblich. Daher werden zur Verringerung des Stanzabfalls lediglich Kreisringsegmente (von zum Beispiel 30 Grad) hergestellt, zu 8 - 10 mm hohen Stapeln pakettiert und einander seitlich überlappend in Ringform übereinandergestapelt. Um zu verhindern, daß die einzelnen Blech-Lagen eines solchen Paketes bzw. die einander überlappenden Pakete sich voneinander lösen, können sie mittels Durchsetz-Fügungen, Kunststoff-Harz, Nieten oder dergl. stabilisiert sein. Allerdings ist bei derart hergestellten Rotoren die maximale Drehzahl beschränkt, da deren Festigkeit in radialer Richtung nicht sehr hoch ist. In entsprechenden Weise ist bei derart hergestellten Statoren die Eigenfrequenz relativ niedrig, was zu einem erhöhten Dämpfungsaufwand führt.

Aus der DE 39 06 368 A1 ist es bekannt, Magnetkreise elektrischer Maschinen durch Bildung von Paketen ausgestanzter magnetischer Bleche herzustellen. Die Pakete werden durch Übereinanderlegen von Blechen gebildet. Zur Verbindung der einzelnen Pakete weisen in einer ersten Ausführungsform diese an ihren einander zugewandten Flächen Verbindungsansätze und entsprechend geformte Verbindungsausnehmungen auf. Die Verbindungsansätze und die Verbindungsausnehmungen sind so gestattet, daß sie durch einfaches Ineinanderschieben die Pakete miteinander verbinden. Dabei sind die aufeinanderliegenden magnetischen Bleche der einzelnen Pakete durch Verschweißen entlang einer senkrechten Linie miteinander verbunden. Dieses Verschweißen dient dazu, die einzelnen Pakete zusammen und kompakt zu halten. In einer zweiten Ausführungsform werden zur Bildung eines Statormagnetkreises die aufeinanderliegenden magnetischen Bleche eines Paketes mit den magnetischen Blechen eines angrenzenden Paketes entlang einer senkrechten Linie verschweißt

Aus der DE 11 40 638 ist es bekannt, Läufer elektrischer Maschinen, bei welchen mehrere Blechlagen der Blechsegmente eine Schicht, und mehrere Schichten die Pakethöhe des Läufers ergeben, miteinander zu verbinden. Diese Verbindung erfolgt mittels Bolzen, die durch Löcher in den Blechsegmenten gesteckt werden. Die Blechsegmente sind dabei mit ihren Stoßstellen von Blechlage zu Blechlage zueinander um einen Lochabstand oder eine ganzzahliges Vielfaches davon versetzt. Dieses Dokument befaßt sich im Detail mit Festigkeitbetrachtungen, die sich aus der Verwendung von Bolzen in Löchern einander überlappender Blechsegmente ergeben.

Aus der DE 974 711 ist bekannt, zur Übertragung der durch die Fliehkräfte hervorgerufenen Tangentialkräfte anstelle der an den Überlappungsstellen erforderlichen Verkettungsbolzen eine_Klebeverbindung einzusetzen.

Aus der DE 692 04 322 T2 (= EP 0500 457 B1) ist es bekannt, einen Stapel von Lagen herzustellen, wobei jede Lage aus mindestens zwei Kreis-Teilbogen-förmigen Blech-Elementen besteht. Diese Blech-Elemente sind an ihren aneinander anliegenden Seiten durch drei abwechselnd orientiert Schwalbenschwänze miteinander verbunden. Die einzelnen Lagen sind dabei so aufeinander gestapelt, daß sich die Blech-Elemente teilweise überlappen.

Aus der DE 1 961 941 B ist eine Dynamomaschine mit versetzten Ringsegmenten bekannt, bei der die einzelnen Segment mit einer Vielzahl in gleichen Abständen an der radial äußeren Umfangsoberfläche angeordneten Schwalbenschwanznuten versehen ist. An diesen radial außen angeordneten Schwalbenschwanznuten sind die Feldpole befestigt. Im Übrigen sind auch bei dieser Anordnung die Ringsegmente mit Löchern für durchgehende Bolzen versehen, mit denen der Aufbau zusammengehalten ist.

Die DE 100 28 097 A1 zeigt einen Läufer für einen Elektromotor, der einen Anker aufweist, der mit den Leiterstäben und den Leiterringen einen Guss-Verbundkörper bildet. Bei der Herstellung des Läufers werden die Blechlamellen in Blechpaketen zusammengefaßt und im Blechpaket benachbarte Blechlamellen werden durch Punktschweißung aneinandergeheftet. Auf diese Weise entstehen axial verlaufende Punktschweißnähte. An zwei diametral gegenüberliegenden Außenseiten des Ankers wird anschließend in axialer Richtung je eine Bandage angelegt. Die Blechlamellen haben eine kreisringförmige Gestalt.

### Der Erfindung zugrundeliegendes Problem

Ausgehend von den eingangs beschriebenen Einschränkungen und Nachteilen bekannter Baugruppen für elektrische Maschinen liegt der Erfindung das Problem zugrunde, diese Baugruppen in ihrer Herstellung grundlegend zu verändern, damit sie signifikant kostengünstiger sind und auch für elektrische Maschinen mit hohen Drehzahlen bzw. niedrigen Eigenfrequenzen einsetzbar sind.

### Efindungsgemäße Lösung

Die erfindungsgemäße Lösung dieser Aufgabe besteht in einer Baugruppe einer elektrischen Maschine mit wenigstens zwei aneinander anliegenden kreisring- oder kreisscheibenförmigen Blech-Lagen, wobei jede der Blech-Lagen aus mehreren kreisring- oder kreisscheibenförmigen Blech-Segmenten gebildet ist, die um eine Mittelachse konzentrisch angeordnet sind, von denen jeweils zwei unter Bildung einer Verbindungsfuge aneinander stoßen, und die jeweils eine vorbestimmte minimale Querschnittsfläche in radialer Richtung aufweisen, und wobei die Blech-Segmente aneinander anliegender Blech-Lagen einander in Umfangsrichtung teilweise überlappen und mit entlang der Umfangsfläche verteilt angeordneten Schweißstellen verbunden sind, wobei die Anzahl der Schweißstellen zwischen einer Verbindungsfuge zweier Blech-Segmente einer Blech-Lage und einer benachbarten Verbindungsfuge zweier Blech-Segmente einer benachbarten Blech-Lage so bemessen ist, daß die Summe der effektiven Flächen dieser Schweißstellen wenigstens annähernd gleich der vorbestimmten minimalen Querschnittsfläche der Blech-Segmente ist.

Diese völlig neuartige Ausgestaltung von elektrischen Maschinen bzw. deren Baugruppen hat den Vorteil, daß praktisch die maximale Drehzahl von aus einstückigen Ronden hergestellten Baugruppen (Rotoren) bzw. vergleichbare Eigenschwingungsfrequenzen wie bei aus einstückigen Ronden hergestellten Baugruppen (Statoren) erzielbar sind, obwohl eine Stanz-abfall- und Herstellungskosteneinsparung bis zu 25% durch die Erfindung realisierbar ist.

### Vorteilhafte Weiterbildungen der Erfindung

In einer bevorzugten Ausführungsform der Erfindung ist die Verbindungsfuge der kreisring- oder kreisscheibenförmigen Blech-Segmente im wesentlichen radial orientiert. Es ist jedoch auch möglich, die Ränder der Blech-Segmente, die miteinander die Verbindungsfuge bilden, so zu strukturieren, daß die Blech-Segmente miteinander verhakt oder verrastet werden können. Dies trägt ebenfalls zur Stabilität bei.

Die Schweißstellen können sowohl an der äußeren als auch an der inneren Umfangsfläche der Blech-Segmente angeordnet sein.

Es ist jedoch auch möglich, die Schweißstellen teilweise an der äußeren Umfangsfläche und teilweise an der inneren Umfangsfläche der Blech-Segmente anzuordnen. Dies gilt insbesondere für Baugruppen, bei denen der Innendurchmesser relativ klein und der Außendurchmesser relativ groß ist, so daß auch die minimale Querschnittsfläche der Blech-Segmente relativ groß ist. Falls bei derartigen Konfigurationen die einzelnen Segmente relativ klein (etwa 30 Grad) sein sollen, kann es erforderlich sein, sowohl am Innen- als auch am Außenumfang Schweißstellen anzuordnen.

Vorzugsweise sind die Schweißstellen im wesentlichen kreisförmig oder oval gestaltet und sind mittels Laserschweißen hergestellt.

Die durch die Schweiß-Stellen miteinander zu verbindenden Blech-Segmente aneinander anliegender Blech-Lagen überlappen einander in Umfangsrichtung um 20 - 70 %, vorzugsweise um 50%. Es ist jedoch auch möglich, den Überlappungsgrad zu variieren bzw. so zu gestalten, daß die Verbindungsfugen von einer Blech-Lage zu nächsten entlang des Umfangs versetzt sind.

Sofern die Summe der Flächen der Schweißstellen entlang des Umfangs der Blech-Segmente aneinander anliegender Blech-Lagen nicht ausreichend sein sollte, kann auch noch zusätzlich die Verbindungsfuge zweier nebeneinander befindlicher Blech-Segmente einer Blech-Lage mittels Schweißstellen zumindest teilweise im Bereich der Umfangsfläche geschlossen sein. Dies kann ebenfalls sowohl an der inneren als auch an der äußeren Umfangsfläche ausgeführt sein.

### Kurzbeschreibung der Zeichnung

In den Fig. sind Details der Erfindung in unterschiedlichen Ausführungsformen veranschaulicht. Dabei zeigt:
Fig. 1 einen schematischen Ausschnitt von Blech-Segmenten aneinander anliegender Blech-Lagen in einer perspektivischen Draufsicht in einer ersten Ausführungsform;
Fig. 2 eine schematische Draufsicht auf eine Baugruppe gemäß der Erfindung in einer zweiten Ausführungsform;
Fig. 3 zeigt eine erfindungsgemäße Baugruppe gezeigt, bei der die Schweißstellen am Außen-Umfang angeordnet sind.

### Derzeit bevorzugte Ausführungsform der Erfindung

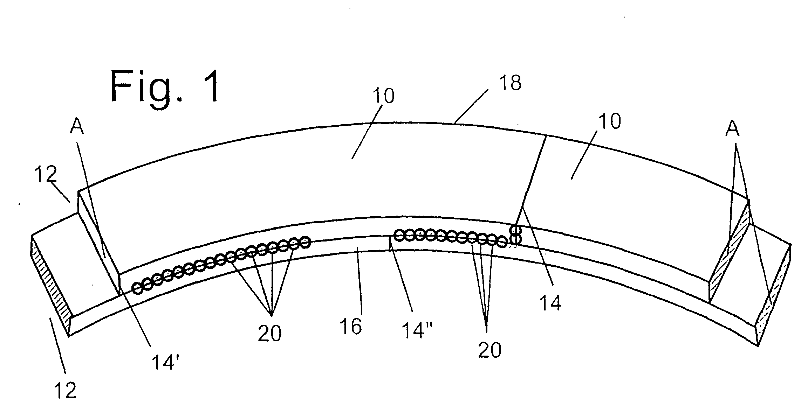

Bei dem in Fig. 1 gezeigten Ausschnitt einer erfindungsgemäßen Baugruppe handelt es sich um einen Rotor einer Außenläufermaschine, bei dem allerdings der besseren Übersicht wegen die elektrischen Details (Kurzschlußkäfig etc.) weggelassen sind. Die Baugruppe ist durch Blech-Segmente 10 gebildet. Zur Bildung einer Blech-Lage 12 sind mehrere kreisringsegment-förmige Blech-Segmente 10 nebeneinander angeordnet, wobei jeweils zwei Blech-Segmente 10 an einer Verbindungsfuge 14 aneinander stoßen. Durch eine Vielzahl aufeinandergestapelter derartiger Blech-Lagen 12 in der gewünschten Höhe entsteht die Baugruppe 10.

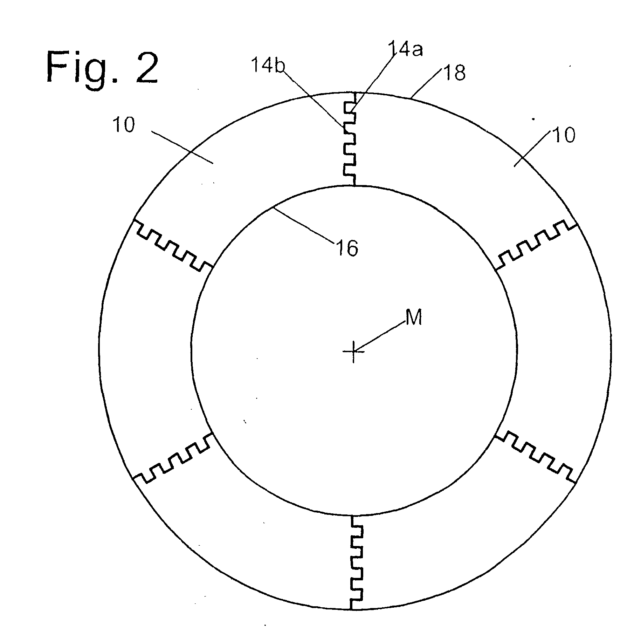

Die Blech-Segmente 10 sind um eine Mittelachse M konzentrisch angeordnet (siehe Fig. 2) und haben jeweils eine vorbestimmte, die Widerstandkraft gegen Zentrifugalkräfte beeinflussende minimale Querschnittsfläche A in radialer Richtung (siehe Fig. 1). Die Blech-Segmente 10 übereinander liegender Blech-Lagen 12 überlappen einander in Umfangsrichtung im gezeigten Beispiel um etwa 25% und sind mit entlang der Umfangsfläche verteilt angeordneten Schweißstellen 20 miteinander verbunden. Dabei ist die Anzahl der Schweißstellen 20 zwischen einer Verbindungsfuge 14' zweier Blech-Segmente 10 einer Blech-Lage 12 (im Beispiel die Verbindungsfuge 14 am linken Rand der oberen Blech-Lage 12 der Fig. 1) und einer benachbarten Verbindungsfuge 14" zweier Blech-Segmente 10 einer benachbarten Blech-Lage 12 (im Beispiel die Verbindungsfuge 14" in der Mitte der unteren Blech-Lage 12 der Fig. 1) so bemessene daß die Summe der effektiven Flächen dieser im wesentlichen kreisförmigen Schweißstellen 20 etwa gleich der Querschnittsfläche (A) der Blech-Segmente ist. Bei der in Fig. 1 mittleren oberen Verbindungsfuge 14 sind die nebeneinander befindlichen Blech-Segmente 10 der oberen Blech-Lage 12 mittels Schweißstellen 20 ebenfalls im Bereich der inneren Umfangsfläche 16 geschlossen.

Im gezeigten Beispiel in Fig. 1 sind die Verbindungsfugen 14 der Blech-Segmente 10 geradlinig und im wesentlichen radial orientiert. Alternativ dazu ist in Fig. 2 gezeigt, daß die radial orientierten Verbindungsfugen 14 der Blech-Segmente 10 durch Zähne 14a, 14b miteinander verhakt sein können, was die Stabiität der Baugruppe ebenfalls erhöht.

Bei der Ausführungsform nach Fig. 1 sind die Schweißstellen 20 an der inneren Umfangsfläche der Blech-Segmente 10 angeordnet und sind mittels Laserschweißen hergestellt.

Nachstehend ist ein Berechnungsbeispiel tabellarisch dargestellt, aus dem sich die relevanten Größen für eine Ausführungsform eines Rotors ergeben.

| | |
|---|---|
| Rotor-Innenradius | 150 mm |
| Rotor-Außenradius | 180 mm |
| Rotor-Blech-Lagen-Dicke | 0,35 mm |
| Rotor-Querschnitts-Fläche | 10,5 mm² |
| Schweißpunkt-Radius | 0,17 mm |
| Schweißpunkt-Fläche | 0,1 mm² |
| Anzahl der Segmente | 12 |
| Uberlappungsgrad | 0,5 |
| Anzahl der Schweißpunkte | 105 |
| Länge der Schweißpunkte | 35,7 mm |
| Segment-Außenlänge | 94,2 mm |
| Segment-Innenlänge | 78,5 mm |

Ersichtlich ist bei diesem Beispiel die Länge der (nebeneinander angeordneten) Schweißpunkte im Verhältnis zur Segment-Innenlänge oder zur Segment-Außenlänge so kurz, daß bei dem gewählten Überlappungsgrad (also dem Maß, um das ein Blech-Segment einer Lage ein Blech-Segment der nächsten (oder der vorhergehenden) Lage überdeckt) die Schweißpunkte sowohl am Innen-Umfang als auch am Außenumfang angebracht sein können. Bei den obigen Ausführungsformen ist davon ausgegangen, daß die einzelnen Schweißstellen im wesentlichen kreisrund sind und sich nicht überlappen. Es ist jedoch auch möglich, daß die Schweißpunkte sich überdecken. In diesem Fall bestimmt sich die effektive Fläche der Summe der Schweißpunkte in Abhängigkeit vom Maß der Überdeckung.

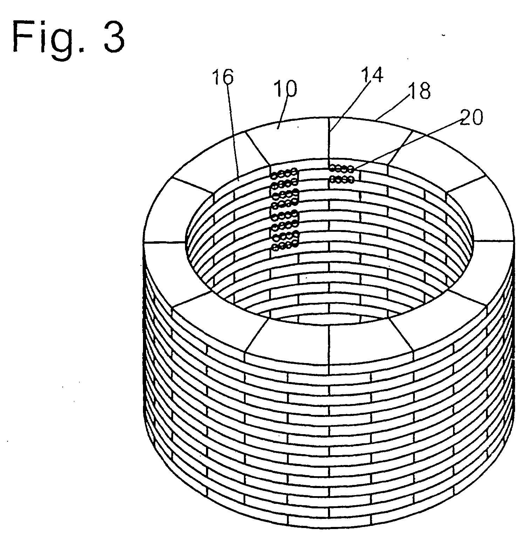

In Fig. 3 ist eine Baugruppe gezeigt, bei der die Schweißstellen am Außen-Umfang angeordnet sind. Im übrigen bezeichnen gleiche Bezugszeichen übereinstimmende Komponenten. Dabei sind zur besseren Übersicht die Schweißpunkte 20 nur an wenigen Orten abgebildet.

Im Übrigen sind die Fig. nur zur prinzipiellen Darstellung, die tatsächlichen Abmessungen und Proportionen funktionsfähiger Ausführungsformen der Erfindung können davon abweichen.

## Patentansprüche

1. Eine Baugruppe einer elektrischen Maschine mit
- wenigstens zwei aneinander anliegenden kreisring- oder kreisscheibenförmigen Blech-Lagen (12), wobei
- jede der Blech-Lagen (12) aus mehreren kreisring- oder kreisscheibenförmigen Blech-Segmenten (10) gebildet ist,
-- die um eine Mittelachse (M) konzentrisch angeordnet sind,
-- von denen jeweils zwei unter Bildung einer Verbindungsfuge (14) aneinander stoßen, und
-- die jeweils eine vorbestimmte minimale Querschnittsfläche (A) in radialer Richtung aufweisen, und wobei
- die Blech-Segmente (10) aneinander anliegender Blech-Lagen (12) einander in Umfangsrichtung teilweise überlappen, **dadurch gekennzeichnet, dass**
- die Blech-Segmente (10) aneinander anliegender Blech-Lagen (12) mit entlang der Umfangsfläche verteilt angeordneten Schweißstellen (20) verbunden sind, wobei die Anzahl der Schweißstellen (20) zwischen einer Verbindungsfuge (14) zweier Blech-Segmente (10) einer Blech-Lage (12) und einer benachbarten Verbindungsfuge (14") zweier Blech-Segmente (10) einer benachbarten Blech-Lage (12) so bemessen ist, dass die Summe der effektiven Flächen dieser Schweißstellen (20) wenigstens annähernd gleich der vorbestimmten minimalen Querschnittsfläche (A) der Blech-Segmente (10) ist.

2. Baugruppe nach Anspruch 1, bei der
- die Verbindungsfuge (14) der kreisring- oder kreisscheibenförmigen Blech-Segmente (10) im wesentlichen radial orientiert ist.

3. Baugruppe nach Anspruch 1, bei der
- die Schweißstellen (20) an der äußeren oder der inneren Umfangsfläche (16, 18) der Blech-Segmente (10) angeordnet sind.

4. Baugruppe nach Anspruch 1, bei der
- die Schweißstellen (20) teilweise an der äußeren Umfangsfläche (18) und teilweise an der inneren Umfangsfläche (16) der Blech-Segmente (10) angeordnet sind.

5. Baugruppe nach Anspruch 1, bei der
- die Schweißstellen (20) im wesentlichen kreisförmig oder oval gestaltet sind.

6. Baugruppe nach Anspruch 1, bei der
- die Schweißstellen (20) mittels Laserschweißen hergestellt sind.

7. Baugruppe nach Anspruch 1, bei der
- die Blech-Segmente (10) aneinander anliegender Blech-Lagen (12) einander in Umfangsrichtung um 20 - 70 % überlappen.

8. Baugruppe nach Anspruch 1, bei der
- die Verbindungsfuge (14) zweier nebeneinander befindlicher Blech-Segmente (10) einer Blech-Lage (12) mittels Schweißstellen (20) zumindest teilweise im Bereich der Umfangsfläche geschlossen ist.

9. Elektrische Maschine bei der ein Stator und/oder ein Rotor als eine Baugruppe nach einem der Ansprüche 1 - 8 ausgestaltet ist.

## Claims

1. An assembly of an electric machine, comprising
- at least two abutting circular ring or circular disk-shaped sheet metal layers (12), wherein
- each of the sheet metal layers (12) is formed by several circular ring or circular disk-shaped sheet metal segments (10)
-- which are arranged concentrically about a centre axis (M),
-- of which two each abut thus forming a connecting joint (14) and
-- comprise a predetermined minimum cross-sectional area (A) in the radial direction, and wherein
- the sheet metal segments (10) of abutting sheet metal layers (12) partially overlap one another in the circumferential direction, **characterised in that**
- the sheet metal segments (10) of abutting sheet metal layers (12) are joined by welds (20) distributed along the circumferential area, with the number of welds (20) between a connecting joint (14) of two sheet metal segments (10) of a sheet metal layer (12) and a neighbouring connecting joint (14") of two sheet metal segments (10) of a neighbouring sheet metal layer (12) being calculated in such a manner that the sum of the effective areas of these welds (20) is at least approximately equal to the predetermined minimum cross-sectional area (A) of the sheet metal segments (10).

2. The assembly according to Claim 1, wherein
- the connecting joint (14) of circular ring or circular shaped sheet metal segments (10) is oriented essentially radially.

3. The assembly according to Claim 1, wherein
- the welds (20) are arranged at the outer or inner circumferential area (16, 18) of the sheet metal segments (10).

4. The assembly according to Claim 1, wherein
- the welds (20) are partly arranged at the outer circumferential area (18) and partly at the inner circumferential area (16) of the sheet metal segments (10).

5. The assembly according to Claim 1, wherein
- the welds (20) are shaped essentially circular or oval.

6. The assembly according to Claim 1, wherein
- the welds (20) are made by means of laser welding.

7. The assembly according to Claim 1, wherein
- the sheet metal segments (10) of abutting sheet metal layer (12) overlap each other by 20 to 70% in the circumferential direction.

8. The assembly according to Claim 1, wherein
- the connecting joint (14) of two adjacent sheet metal segments (10) of one sheet metal layer (12) is closed at least partially in the region of the circumferential area.

9. An electric machine, wherein a stator and/or a rotor is/are configured as an assembly according to one of Claims 1 to 8.

## Revendications

1. Sous-ensemble pour une machine électrique comprenant :
- au moins deux couches de tôle (12), en forme d'anneau ou de disque circulaire, en appui l'une sur l'autre, où
- chacune des couches de tôle (12) est formée d'une pluralité de segments de tôle (10), en forme d'anneau ou de disque circulaire,
-- disposés concentriquement autour d'un axe central (M),
-- dont chaque fois deux sont jointoyés en formant un joint de liaison (14), et
-- présentent chacun une aire de section transversale (A) minimale prédéterminée en direction radiale, et où
- les segments de tôle (10) de couches de tôle (12) en appui l'une sur l'autre, se chevauchent partiellement en direction périphérique, **caractérisé en ce que**
- les segments de tôle (10) de couches de tôle (12), en appui l'une sur l'autre, sont reliés par des points de soudure (20), répartis le long de la surface périphérique, le nombre de points de soudure (20), entre un joint de liaison (14) de deux segments de tôle (10) d'une couche de tôle (12) et un joint de liaison (14' '), voisin, de deux segments de tôle (10) d'une couche de tôle (12) voisine, étant tel que la somme des aires effectives de ces points de soudure (20) soit au moins à peu près égale à l'aire de section transversale (A) minimale prédéterminée des segments de tôle (10).

2. Sous-ensemble selon la revendication 1, dans lequel
- le joint de liaison (14) des segments de tôle (10) en forme d'anneau ou de disque circulaire est orienté essentiellement radialement.

3. Sous-ensemble selon la revendication 1, dans lequel
- les points de soudage (20), sont disposés sur la face périphérique extérieure ou intérieure (16, 18) des segments de tôle (10).

4. Sous-ensemble selon la revendication 1, dans lequel
- les points de liaison (20) sont disposés en partie sur la face périphérique extérieure (18) et en partie sur la face périphérique intérieure (16) des segments de tôle (10).

5. Sous-ensemble selon la revendication 1, dans lequel
- les points de liaison (20) sont de forme essentiellement circulaire ou ovale.

6. Sous-ensemble selon la revendication 1, dans lequel
- les points de soudage (20) sont produits par soudage au laser.

7. Sous-ensemble selon la revendication 1, dans lequel
- les segments de tôle (10) de couches de tôle (12) en appui les unes sur les autres se chevauchent mutuellement, de 20 à 70 %, en direction périphérique.

8. Sous-ensemble selon la revendication 1, dans lequel
- le joint de liaison (24) de deux segments de tôle (10), se trouvant l'un à côté de l'autre, d'une couche de tôle (12), est fermé par des points de soudure (20), au moins partiellement dans la zone de la surface périphérique.

9. Machine électrique, dans laquelle un stator et/ou un rotor est/sont réalisé(e) sous la forme de sous-ensemble, selon l'une des revendications 1 à 8.
